# EUROPEAN PATENT APPLICATION

(11) **EP 4 645 101 A1**
(43) Date of publication of application: **05.11.2025**
(21) Application number: 24777477.1
(22) Date of filing: 24.01.2024
(51) Int. Cl.: G06F 12/0815

(54) **MEMORY BUFFER POOL MAINTENANCE METHOD, DEVICE, SYSTEM, AND STORAGE MEDIUM**

(30) Priority: 27.03.2023 CN 202310313455
(71) Applicant: Cloud Intelligence Assets Holding (Singapore) Private Limited, Singapore 189554 (SG)
(72) Inventor: FANG, Xing, Hangzhou, Zhejiang 310030 (CN); YANG, Hang, Hangzhou, Zhejiang 310030 (CN)
(74) Representative: Novagraaf Technologies
(86) International application number: PCT/CN2024/073881
(87) International publication number: WO 2024/198682

(57) **Abstract**

Embodiments of the present disclosure provide a memory buffer pool maintenance method, a device, a system, and a storage medium. In the embodiments of the present disclosure, for a disaggregated storage and compute architecture, a processing unit interconnected with a computing unit is additionally provided in a computing node and a memory node. A consistency maintenance task of memory cache data is issued to the processing unit for execution, rather than being performed by the computing unit. Since the processing unit has a capability to directly access a local memory buffer pool or a shared memory buffer pool, data transmission during the consistency maintenance of the memory cache data is largely completed internally within the processing unit, without being required to be uploaded to the computing unit, thereby eliminating a data transmission delay between the computing unit and a network interface card, and achieving an objective of reducing the data transmission delay during the consistency maintenance of the cache data.

## Description

The present disclosure claims priority of Chinese Patent Application No. 202310313455.8, filed to the China National Intellectual Property Administration on March 27, 2023 and titled "MEMORY BUFFER POOL MAINTENANCE METHOD, DEVICE, SYSTEM, AND STORAGE MEDIUM", the content of which is hereby incorporated by reference in its entirety.

### TECHNICAL FIELD

The present disclosure relates to the field of cloud computing technologies, and in particular, to a memory buffer pool maintenance method, a device, a system, and a storage medium.

### BACKGROUND OF THE INVENTION

With the development of cloud-native technologies, cloud-native-based database applications appear. The cloud-native-based database applications implement pooling and allocation-on-demand of storage resources and computing resources by using software and hardware resources on a cloud, and have higher resource utilization and higher availability. However, different database applications have different demands for the storage resources and the computing resources. Therefore, capacities of the computing resources and memory resources are dynamically increased and reduced on demand according to a load change situation of the each database application, thereby being of great significance to obtain a stable high throughput rate and low delay, improve resource utilization, and save resource costs.

To this end, the cloud-native-based database applications use a disaggregated storage and compute architecture. In the disaggregated storage and compute architecture, a computing node mainly provides a computing resource, a remote memory node is set as an extension of a memory buffer pool resource on the computing node and is responsible for providing a remote memory buffer pool resource, and a persistent storage node provides a persistent storage resource, to form three independent resource pools. The computing resource on the computing node is disaggregated from the memory buffer pool resource provided by the remote memory node. The capacity of each resource pool is independently increased and reduced, which is beneficial to implement finer resource on-demand request and flexibility.

In the disaggregated storage and compute architecture, on one hand, the persistent storage resource is relied on to provide reliability and a fault tolerance mechanism, and on the other hand, a memory buffer pool is used for caching data in persistent storage to provide a quick response capability. In addition, data in a remote buffer pool is shared by multiple computing nodes, which is beneficial to reduce storage costs, but causes the problem of consistency of cached data. The maintenance and delay of the consistency of the cached data directly affect the throughput rate and response delay of the database applications, and are crucial to application performance and extensibility. How to reduce a data transmission delay during the consistency maintenance of the cache data is a main technical problem faced by the disaggregated storage and compute architecture.

### SUMMARY OF THE INVENTION

Multiple aspects of the present disclosure provide a memory buffer pool maintenance method, a device, a system, and a storage medium, so as to reduce a data transmission delay during consistency maintenance of cached data.

Some embodiments of the present disclosure provide a computing node, including: a first computing unit and a first processing unit, the first computing unit being interconnected with the first processing unit. The first computing unit is configured to run an upper-layer application and provide a local memory buffer pool for caching page data to the upper-layer application, where the local memory buffer pool is directly accessed by the first processing unit. The first processing unit is further network-connected with a second processing unit in at least one memory node, and is configured to perform data interaction with the second processing unit, to synchronize page data and/or a page state between the local memory buffer pool and a shared memory buffer pool provided by the at least one memory node for the upper-layer application.

Some embodiments of the present disclosure provide a memory node, including: a second computing unit and a second processing unit, where the second computing unit is interconnected with the second processing unit. The second computing unit is configured to provide a shared memory buffer pool for an upper-layer application running on at least one computing node, the shared memory buffer pool being directly accessed by the second processing unit. The second processing unit is further network-connected with a first processing unit in at least one computing node, and is configured to perform data interaction with the first processing unit, to synchronize page data and/or a page state between the shared memory buffer pool and a local memory buffer pool provided by the at least one computing node for the upper-layer application.

Some embodiments of the present disclosure further provide a memory buffer pool maintenance method, which is applied to a computing node. The computing node includes a first computing unit and a first processing unit. The first processing unit is interconnected with the first computing unit and is network-connected with a second processing unit in at least one memory node. The memory buffer pool maintenance method includes that: the first processing unit performs data interaction with the second processing unit in at least one memory node, to synchronize page data and/or a page state between a local memory buffer pool provided by the first computing unit to an upper-layer application and a shared memory buffer pool provided by at least one memory node for the upper-layer application. The local memory buffer pool is directly accessed by the first processing unit.

Some embodiments of the present disclosure further provide a memory buffer pool maintenance method, which is applied to a memory node. The memory node includes a second computing unit and a second processing unit. The second processing unit is interconnected with the second computing unit and is network-connected with a first processing unit in at least one computing node. The memory buffer pool maintenance method includes that: the second processing unit performs data interaction with the first processing unit in at least one computing node, to synchronize page data and/or a page state between a shared memory buffer pool provided by the memory node for an upper-layer application and a local memory buffer pool provided by at least one computing node for the upper-layer application. The shared memory buffer pool is directly accessed by the second processing unit.

Some embodiments of the present disclosure further provide a disaggregated storage and compute system, including: multiple computing nodes, at least one memory node, and at least one storage node. The at least one storage node is configured to persistently store page data in a shared memory buffer pool and/or a local memory buffer pool.

Some embodiments of the present disclosure further provide a processing unit. The processing unit includes: a processing module, a network interface card module, and a storage module.

The storage module stores a computer program, and the processing module executes the computer program stored in the storage module, to implement steps of the memory buffer pool maintenance method.

Some embodiments of the present disclosure further provide a computer-readable storage medium storing a computer program. The computer program, when executed by a processor, causes the processor to implement steps of the memory buffer pool maintenance method.

### BRIEF DESCRIPTION OF DRAWINGS

In the accompanying drawings, unless otherwise specified, same reference numerals throughout multiple accompanying drawings represent same or similar parts or elements. These accompanying drawings are not necessarily drawn to scale. It should be understood that these accompanying drawings describe some implementations disclosed according to the present disclosure, and should not be construed as limiting the scope of the present disclosure.

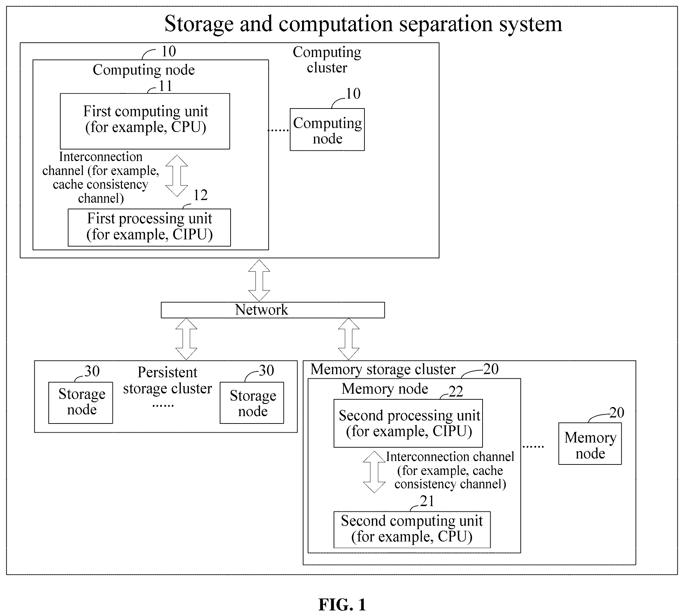

The accompanying drawings described herein are used for providing a further understanding of the present disclosure, and form part of the present disclosure. Exemplary embodiments of the present disclosure and descriptions thereof are used for explaining the present disclosure, and do not constitute any inappropriate limitation to the present disclosure. The following FIG. 1 to FIG. 10 are included in the accompanying drawings.
FIG. 1 shows a structural schematic diagram of a disaggregated storage and compute system according to some embodiments of the present disclosure.
FIG. 2 shows a structural schematic diagram of another disaggregated storage and compute system according to some embodiments of the present disclosure.
FIG. 3 shows an exemplary principle diagram of buffer pool consistency maintenance according to some embodiments of the present disclosure.
FIG. 4 shows an exemplary flowchart of updating a page state on a slave node of a CIPU integrated with a DSA according to some embodiments of the present disclosure.
FIG. 5 shows a logic principle diagram of exemplary buffer pool consistency maintenance according to some embodiments of the present disclosure.
FIG. 6 shows an exemplary comparison diagram of a doublewrite procedure in some cases and a doublewrite procedure according to some embodiments of the present disclosure.
FIG. 7 shows an exemplary signaling interaction diagram of a memory buffer pool maintenance method according to some embodiments of the present disclosure.
FIG. 8 shows an exemplary signaling interaction diagram of another memory buffer pool maintenance method according to the present disclosure.
FIG. 9 shows an exemplary signaling interaction diagram of another memory buffer pool maintenance method according to the present disclosure.
FIG. 10 shows a structural schematic diagram of a processing unit according to some embodiments of the present disclosure.

### DETAILED DESCRIPTION OF THE INVENTION

To clearly state the objectives, technical solutions, and advantages of the present disclosure, the technical solutions of the present disclosure will be clearly and completely described below with reference to specific embodiments of the present disclosure and the accompanying drawings. Apparently, the described embodiments are some embodiments rather than all the embodiments of the present disclosure. All other embodiments obtained by a person of ordinary skill in the art based on the embodiments of the present disclosure without creative efforts shall fall within the protection scope of the present disclosure.

It should be noted that user information (including, but not limited to, user equipment information, user personal information, and the like) and data (including, but not limited to, data for analysis, stored data, displayed data, and the like) involved in the present disclosure are both information and data that are authorized by a user or that are sufficiently authorized by all parties, related data needs to be collected, used, and processed by complying with related laws and regulations and standards in related countries and regions, and a corresponding operation entry is provided for the user to select to authorize or reject.

For a technical problem, faced by an existing disaggregated storage and compute architecture, of how to reduce a data transmission delay during consistency maintenance of cached data, in the embodiments of the present disclosure, for a disaggregated storage and compute architecture, a processing unit interconnected with a computing unit is additionally provided in a computing node and a memory node. A consistency maintenance task of memory cache data is issued to the processing unit for execution instead of being completed on the computing unit. The processing unit has a capability to directly access a local memory buffer pool or a shared memory buffer pool, so that data transmission during the consistency maintenance of the memory cache data is mostly completed inside the processing unit, and data does not need to be uploaded to the computing unit, thereby eliminating a data transmission delay between the computing unit and a network interface card, and achieving an objective of reducing the data transmission delay during the consistency maintenance of the cache data.

The following describes the technical solutions provided in the embodiments of the present disclosure in detail with reference to the accompanying drawings.

FIG. 1 is a structural schematic diagram of a disaggregated storage and compute system according to some embodiments of the present disclosure. As shown in FIG. 1, the system includes: multiple computing nodes 10, at least one memory node 20, and at least one storage node 30.

In some embodiments, device implementation forms of the computing node 10, the memory node 20, and the storage node 30 are not limited. For example, the computing node 10 may be in any device form having a computing capability. For example, the computing node may be but is not limited to: a smartphone, a laptop, a desktop, a wearable device, a conventional server, a cloud server, a server cluster, or the like. The memory node 20 may be in any device form that can provide a memory resource. For example, the memory node may be but is not limited to: a computer, a conventional server, a cloud server, or the like. Correspondingly, the storage node 30 may be in any device form that can provide a persistent storage resource. For example, the storage node may be any storage device.

In some embodiments, the computing node 10 mainly provides a computing capability, is configured to run an upper-layer application, and provides a relatively limited local memory buffer pool for the upper-layer application, to accommodate various data that needs to be accessed by the upper-layer application frequently. In some embodiments, types of the upper-layer application are not limited. The upper-layer application may be any application having memory and persistent storage demands, for example, may be any cloud computing service, database instance, stream computing service, video processing service, or the like. Certainly, different upper-layer applications generate different data. In some embodiments, the storage node 30 is responsible for providing a persistent and reliable shared storage resource to the upper-layer application. For example, taking the upper-layer application being a database instance as an example, write-ahead logging (WAL) data, a database table, a check point, and the like in the database instance may be stored. The memory node 20 is set as an intermediate layer of the local memory buffer pool and persistent shared storage, and is mainly configured to provide a shared memory buffer pool for the upper-layer application. The shared memory buffer pool is an extension of the local memory buffer pool. In some embodiments, the local memory buffer pool and the shared memory buffer pool are managed in a memory page manner, and data in these memory buffer pools is referred to as page data.

As shown in FIG. 1, the computing node 10, the memory node 20, and the storage node 30 are network-connected with one another. The networking manner includes but is not limited to: Ethernet, remote direct memory access (RDMA), and the like. The multiple computing nodes 10 are deployed at different positions in a distributed manner. Correspondingly, in the presence of multiple memory nodes 20, the memory nodes are deployed at different positions in a distributed manner. In the presence of multiple storage nodes 30, the storage nodes are deployed at different positions in a distributed manner. For example, in FIG. 1, the multiple computing nodes 10 form a computing cluster, at least one memory node 20 forms a memory storage cluster, and at least one storage node 30 forms a persistent storage cluster. It should be noted that management of various nodes in a cluster form is an example. The present disclosure is not limited thereto.

In some embodiments, the computing node 10 includes a first computing unit 11 and a first processing unit 12 having a network communication capability and a computing capability. The first computing unit 11 and the first processing unit 12 are interconnected. The memory node 20 includes a second computing unit 21 and a second processing unit 22 having a network communication capability and a computing capability. The second computing unit 21 and the second processing unit 22 are interconnected. The first computing unit 11 and the second computing unit 21 may be any device having a computing capability, for example, including but not limited to: a chip or a module such as a central processing unit (CPU) or a data processing unit (DPU). The first processing unit 12 and the second processing unit 22 may be any device having a network communication capability and a computing capability, for example, may be some chips or modules such as a cloud infrastructure processing unit (CIPU), a smart network interface card (Smart NIC), a network interface card (NIC), a DPU, and an infrastructure processing unit (IPU) integrated with a network interface card module. In FIG. 1, an example in which the first computing unit 11 and the second computing unit 21 are CPUs and the first processing unit 12 and the second processing unit 22 are CIPUs is used for illustration. However, the present disclosure is not limited thereto.

In some embodiments, the first computing unit 11 and the second computing unit 21 have similar functions of mainly providing a computing capability for the nodes to which the units belong. However, because the computing node 10 and the memory node 20 have different functions, computing capability and memory configurations are different. Similarly, the first processing unit 12 and the second processing unit 22 have similar functions of mainly providing a memory cache consistency maintenance service for the nodes to which the units belong. However, because the computing node 10 and the memory node 20 have different functions, computing capability, network capability, and memory configurations are different.

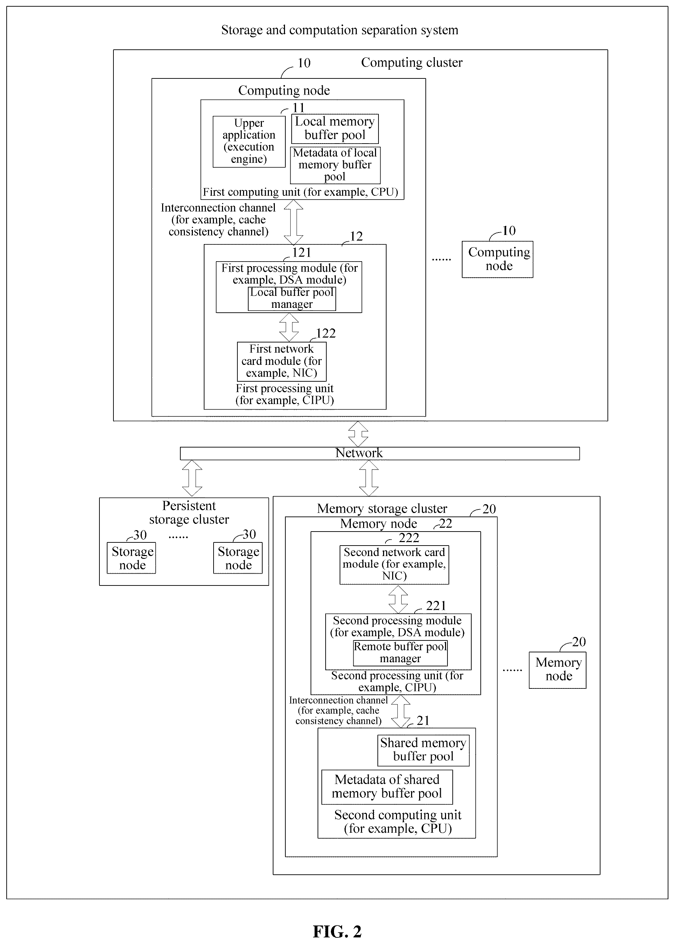

In some embodiments, as shown in FIG. 2, the first computing unit 11 is responsible for running an upper-layer application on a computing node 10 to which the first computing unit belongs, providing a local memory buffer pool for caching page data to the upper-layer application, and managing the local memory buffer pool. For example, the first computing unit is responsible for operations such as allocation, initialization, and configuration of the local memory buffer pool. In some implementations, during running of the upper-layer application, the first computing unit 11 further receives a user request and responds to the user request. The user request and the manner of responding to the user request may be different according to different upper-layer applications. This is not concerned about in some embodiments of the present disclosure. The upper-layer application is any application that runs on the computing node 10 and needs to perform data caching by using a local memory buffer pool and a shared memory buffer pool provided by the memory node 20. For example, the upper-layer application may be but is not limited to a database instance. In the computing node 10, the first computing unit 11 runs at least one upper-layer application and provides a corresponding local memory buffer pool to each upper-layer application. Correspondingly, as shown in FIG. 2, the second computing unit 21 in the memory node 20 is responsible for providing a shared memory buffer pool for an upper-layer application running on at least one computing node 10 and managing the shared memory buffer pool. For example, the second computing unit is responsible for operations such as allocation, initialization, and configuration of the shared memory buffer pool. It should be noted that a correspondence between the memory node 20 and the computing node 10 may be one-to-one, many-to-one, or one-to-many. To be specific, one memory node 20 provides a shared memory buffer pool to upper-layer applications on the at least one computing node 10, and one computing node 10 uses at least one memory node 20 to provide a shared memory buffer pool for this computing node. The correspondence between the computing node 10 and the memory node 20 may be maintained in advance.

In some implementations, as shown in FIG. 2, the first computing unit 11 further maintains metadata of the local memory buffer pool. The metadata is data needed for managing the local memory buffer pool, and includes but is not limited to: a free list, various linked lists, page state information (such as invalidation, unique, or share), and an address mapping table. Correspondingly, as shown in FIG. 2, the second computing unit 21 maintains metadata of the shared memory buffer pool. The metadata is data needed for managing the shared memory buffer pool, and includes but is not limited to: a free list, various linked lists, page state information, and an address mapping table. Regardless of the metadata of the local memory buffer pool or the metadata of the shared memory buffer pool, various linked lists in the metadata include, but are not limited to: a page access information maintenance linked list, for example, a least recently used (LRU) linked list, a linked list for storing dirty data, or a free linked list. The address mapping table is used for storing a mapping relationship between a physical address and a logic address of page data. With access to the local memory buffer pool or the shared memory buffer pool, the corresponding metadata is also synchronously updated.

In some embodiments, the first processing unit 12 is additionally provided in the computing node 10. The first processing unit 12 is interconnected with the first computing unit 11 through an interconnection channel. The local memory buffer pool and metadata of the local memory buffer pool are directly accessed based on the interconnection channel without using the first computing unit 11. For example, the first processing unit 12 directly reads page data from the local memory buffer pool, or directly writes the page data to the local memory buffer pool. Metadata related to a consistency maintenance process of memory cached data is further directly read from the metadata of the local memory buffer pool. Alternatively, the metadata related to a consistency maintenance process of memory cached data is modified.

Correspondingly, the second processing unit 22 is additionally provided on the memory node 20. The second processing unit 22 is interconnected with the second computing unit 21 through the interconnection channel. The shared memory buffer pool and the metadata of the shared memory buffer pool are directly accessed based on the interconnection channel without using the second computing unit 21. For example, the second processing unit 22 directly reads page data from the shared memory buffer pool in the memory node 20 to which the second processing unit belongs, or directly writes the page data to the shared memory buffer pool. Metadata related to a consistency maintenance process of memory cached data is further directly read from the metadata of the shared memory buffer pool. Alternatively, the metadata related to a consistency maintenance process of memory cached data is modified.

In some embodiments, implementation manners of the interconnection channel are not limited. For example, the interconnection channel may be but is not limited to: a peripheral component interconnect express (PCIe) channel, or a cache consistency channel. In some implementations, through cache consistency channels, the first processing unit 12 is interconnected with the first computing unit 11, and the second processing unit 22 is interconnected with the second computing unit 21. In some embodiments of the present disclosure, some existing cache consistency channels are used, for example, an ultra path interconnect (UPI) channel, a compute express link (CML) channel, or a cache coherent interconnect for accelerators (CCIX) channel, or a self-developed cache consistency channel is used. This is not limited.

As the upper-layer application runs, more data is generated. When a local memory buffer pool is insufficient, old page data may be replaced out of the local memory buffer pool by using a page replacement mechanism. The replaced page data may be cached into the shared memory buffer pool provided by at least one memory node 20. The page replacement mechanism may be performed by the first computing unit 11, or may be performed by the first processing unit 12, which are not limited. When the page replacement mechanism is performed by the first computing unit 11, the first computing unit 11 may monitor usage or attribute information of page data in the local memory buffer pool according to requirements related to the page replacement mechanism, find page data that needs to be replaced out of the local memory buffer pool, and then notify the first processing unit 12. The first processing unit 12 directly reads the page data that needs to be replaced out of the local memory buffer pool, and provides the page data for the second processing unit 22 in the corresponding memory node 20. The second processing unit 22 in the memory node 20 writes the page data to the shared memory buffer pool of the memory node 20. In some implementations, based on a direct access capability of the first processing unit 12 to the local memory buffer pool, the page replacement mechanism may be performed by the first processing unit 12. For example, the first processing unit 12 may monitor usage or attribute information of page data in the local memory buffer pool according to requirements related to the page replacement mechanism, find page data that needs to be replaced out of the local memory buffer pool, directly read the page data that needs to be replaced out of the local memory buffer pool, and provide the page data to the second processing unit 22 in the corresponding memory node 20. The second processing unit 22 in the memory node 20 writes the page data to the shared memory buffer pool of the memory node 20. A specific implementation of the page replacement mechanism is not limited in some embodiments of the present disclosure either. For example, a conventional least recently used (LRU) manner may be adopted. Alternatively, the used page replacement mechanism may be flexibly defined with reference to some information of the upper-layer application, so that the first computing unit 11 or the first processing unit 12 may perform page replacement based on some attribute information of the page data, such as a page type.

In addition, in a disaggregated storage and compute architecture, the same upper-layer application is required to run on multiple different computing nodes 10 at the same time, or multiple computing nodes 10 need to cooperate with each other. This means that the multiple computing nodes 10 need to share the same page data, thereby involving a problem of data consistency between a shared memory buffer pool and a local memory buffer pool, to ensure that each computing node 10 can use correct page data.

In some embodiments, for any computing node 10, the first processing unit 12 of this computing node 10 has a network communication capability and a computing capability, is network-connected with the second processing unit 22 in the at least one memory node 20, and can cooperate with the second processing unit 22 in the at least one memory node 20. The cooperation herein mainly means that the first processing unit 12 performs data interaction with the second processing unit 22, to synchronize page data and/or a page state between the local memory buffer pool and the shared memory buffer pool provided by the at least one memory node 20 for the upper-layer application, thereby implementing consistency of cached data. Correspondingly, for any memory node 20, the second processing unit 22 of this memory node has a network communication capability and a computing capability, is network-connected with the first processing unit 12 of the at least one computing node 10, and performs data interaction with the first processing unit 12, to synchronize page data and/or a page state between the shared memory buffer pool and the local memory buffer pool provided by at least one computing node 10 for the upper-layer application, thereby implementing data consistency.

In some implementations, as shown in FIG. 2, a local buffer pool manager runs on the first processing unit 12 to implement a memory cache consistency maintenance function. In some embodiments, the local buffer pool manager is responsible for managing the local memory buffer pool. When an operation such as refreshing dirty page data or reading new page data needs to be performed on the local memory buffer pool, quick read-write operations to the shared memory buffer pool are performed, and page state synchronization is performed in a read-write process. Correspondingly, as shown in FIG. 2, a remote buffer pool manager runs on the second processing unit 22 to implement a memory cache consistency maintenance function. For example, the remote buffer pool manager is responsible for receiving requests such as check points, refreshing dirty page data, and reading new page data from the local buffer pool manager, responding to these requests based on access to the shared memory buffer pool, and performing page state synchronization in a read-write process. For example, the local buffer pool manager is further responsible for performing fast fault recovery on the computing node by using page data and the check points in the remote shared memory buffer pool when the computing node has a fault. Correspondingly, the remote buffer pool manager is further responsible for reading the check points, the WAL, and the like from the persistently shared storage node 30 when the computing node has a fault, to provide data support for performing fault recovery on the computing node.

In some embodiments, the first processing unit 12 is a hardware structure, and can directly access the local memory buffer pool on the computing node 10 on which the first processing unit is located through the interconnection channel (for example, a cache consistency channel). The local memory buffer pool stores user-state data generated by the upper-layer application. To be specific, the first processing unit 12 shares the user-state data generated by the upper-layer application instead of kernel-state data, and the user-state data is shared without using an operating system (OS) of the computing node 10. Therefore, the first processing unit 12 is additionally provided in the computing node 10, so that a memory cached data consistency maintenance task can be implemented at an application layer, a protocol stack of the operating system is bypassed, and a data access feature in the upper-layer application can be fully used in a cached data consistency maintenance process, thereby improving transmission performance of data consistency maintenance. For example, in the page replacement mechanism, data access features of more application layers may be considered instead of purely based on information such as time and times of page access. For example, some page data with a relatively low access rate is determined according to a type of the page data, and the page data is preferentially replaced out of the local memory buffer pool instead of relying on information such as access time and frequencies of the page data.

Next, a process of synchronizing page data and/or a page state between the local memory buffer pool and the shared memory buffer pool by means of cooperation between the first processing unit 12 and the second processing unit 22 is described in detail. The first processing unit 12 cooperates with the second processing unit 22 to synchronize the page data and/or the page state between the local memory buffer pool and the shared memory buffer pool, which is summarized into the following cases. In case 1, the page data is written to the shared memory buffer pool. In case 2, the page data is read from the shared memory buffer pool. In case 3, a read lock is added to the page data. In case 4, a write lock is added to the page data. In case 5, the page data is invalidated.

The following describes the foregoing cases 1 to 5 in detail from the perspective of data consistency maintenance between any computing node and any memory node.

In case 1, the first processing unit 12 of the first computing node reads first page data from the local memory buffer pool, and sends the first page data to the second processing unit 22 in the first memory node. The second processing unit 22 in the first memory node writes the first page data to the shared memory buffer pool in the first memory node.

In case 2, the second processing unit 22 in the second memory node reads second page data from the shared memory buffer pool of the second memory node and sends the second page data to the first processing unit 12 of the first computing node. The first processing unit 12 of the first computing node receives the second page data sent by the second processing unit 22 in the second memory node, and writes the second page data to the local memory buffer pool.

In case 3, continuing to case 2, before receiving the second page data, the first processing unit 12 of the first computing node sends a request for adding a read lock to the second processing unit 22 in the second memory node, so that the second processing unit 22 in the second memory node adds the read lock to the second page data.

In cases 4 and 5, before rewriting third page data in the local memory buffer pool, the first computing unit 12 in the third computing node sends, to the second processing unit 22 in the third memory node, a request for adding a write lock to and invalidating the third page data. The second processing unit 22 in the third memory node adds the write lock to the third page data in the shared memory buffer pool and notifies other computing nodes including the third page data in the local memory buffer pool to perform invalidation processing on the third page data.

In some implementations, before rewriting the third page data in the local memory buffer pool, the first computing unit 12 in the third computing node sends, to the second processing unit 22 in the third memory node, a request for adding a write lock to the third page data. The second processing unit 22 in the third memory node adds the write lock to the third page data in the shared memory buffer pool, and returns write lock adding confirmation information. The first computing unit 12 in the third computing node sends a request for invalidating the third page data to the second processing unit 22 in the third memory node. The second processing unit 22 in the third memory node notifies other computing nodes including the third page data in the local memory buffer pool to perform invalidation processing on the third page data, and returns invalidation confirmation information to the second processing unit 22 in the third memory node after receiving confirmation information returned by the other computing nodes.

In the foregoing, the first computing node, the second computing node, and the third computing node are any computing nodes, and are the same computing node, or are different computing nodes. Correspondingly, the first memory node, the second memory node, and the third memory node are any memory nodes, and are the same memory node, or are different memory nodes.

In some embodiments, internal implementation forms of the first processing unit and the second processing unit are not limited. In some embodiments, as shown in FIG. 2, the first processing unit 12 includes a first processing module 121 and a first network interface card module 122. Correspondingly, the second processing unit 22 includes a second processing module 221 and a second network interface card module 222. In some implementations, the first processing module 121 and the second processing module 221 are any components having a computing capability, for example, a domain specific architecture (DSA) module or chip. The first network interface card module 122 and the second network interface card module 222 are, but are not limited to, NICs.

The following further describes the processes of the foregoing cases 1 to 5 in detail with reference to detailed implementation structures of the first processing unit 12 and the second processing unit 22 shown in FIG. 2.

For case 1 of writing the page data to the shared memory buffer pool, the first processing module in the first computing node reads the first page data from the local memory buffer pool and transmits the first page data to the second processing module in the first memory node by using the first network interface card module in the first computing node and the second network interface card module in the first memory node. The second processing module in the first memory node writes the first page data to the shared memory buffer pool in the first memory node, to write the page data from the local memory buffer pool to the shared memory buffer pool.

For example, to improve write performance of writing the page data to the shared memory buffer pool, the first processing module in the first computing node is configured to: read first page data from the local memory buffer pool, and send the first page data to the second network interface card module in the first memory node by using the first network interface card module, so that the second processing module in the first memory node writes the first page data to the shared memory buffer pool in the first memory node.

Correspondingly, the second processing module in the second processing unit of the first memory node is configured to: receive, by using the second network interface card module in the second processing unit, the first page data sent by the first network interface card module in the first computing node, and write the first page data to the shared memory buffer pool in the first memory node.

In some embodiments, a condition under which the first processing module of the first computing node reads the first page data from the local memory buffer pool is not limited. In some embodiments, the page replacement mechanism is performed by the first computing unit in the first computing node. The first computing unit in the first computing node determines, according to the page replacement mechanism, whether there is modified page data to be retired in the local memory buffer pool. In the presence of modified page data, the modified page data to be retired is set as the first page data. Then, a dirty page write-back instruction is sent to the first processing module in the first computing node. Correspondingly, the first processing module in the first computing node is specifically configured to read the first page data from the local memory buffer pool in response to the dirty page write-back instruction sent by the first computing unit in the first computing node. Reference may be made to the following descriptions in an example of a page data state for the description of the "modified state". Details are not described herein again. Alternatively, in some embodiments, the page replacement mechanism is performed by the first processing module in the first computing node. The first processing module in the first computing node determines, according to the page replacement mechanism, whether there exists first page data to be retired and being in a modified state in the local memory buffer pool. In the presence of modified first page data, the first page data is read from the local memory buffer pool. In the foregoing example, the first page data is dirty page data to be written back. However, a scenario in which page data needs to be written to the shared memory buffer pool is not limited to a scenario in which the dirty page data is written back.

For case 2 of reading the page data from the shared memory buffer pool, the second processing module in the second memory node reads the second page data from the shared memory buffer pool and transmits the second page data to the first network interface card module in the second computing node by using the second network interface card module in the second memory node. The first network interface card module in the second computing node provides the second page data to the first processing module in the second computing node. The first processing module in the second computing node writes the second page data to the local memory buffer pool in the second computing node, to read the page data from the shared memory buffer pool on the memory node side.

For example, to improve read performance of reading the page data from the shared memory buffer pool, the second processing module in the second memory node is configured to: read second page data from the shared memory buffer pool, and send the second page data to the first network interface card module in the second computing node by using the second network interface card module in the second memory node, so that the first processing module in the second computing node writes the second page data to the local memory buffer pool of the second computing node. Correspondingly, the first processing module in the second computing node is configured to: receive, by using the first network interface card module in the second computing node, the second page data sent by the second network interface card module in the second memory node, and write the second page data to the local memory buffer pool.

In some embodiments, a condition under which the second processing module in the second memory node reads the second page data from the shared memory buffer pool is not limited. In some embodiments, the first processing module in the second computing node sends a page read request to the second processing module in the second memory node by using the first network interface card module of the first computing node in response to a page read instruction sent by the first computing unit in the first computing node, so that the second processing module in the second memory node reads the second page data from the shared memory buffer pool of the second memory node and returns the second page data to the first processing module in the second computing node by using the second network interface card module in the second memory node and the first network interface card module in the second computing node. The first processing module in the second computing node writes the second page data to the local memory buffer pool in the second computing node.

For the first computing unit in the second computing node, during running of the upper-layer application, the first computing unit queries the local memory buffer pool according to a running instruction code, to determine whether the page data required for the first computing unit stores in the local memory buffer pool. In some embodiments, multiple states are maintained for the page data in the local memory buffer pool and the shared memory buffer pool. For example, the multiple states include but are not limited to: a modified state, an exclusive state, a shared state, an invalidated state, and write lock and read lock adding states. The multiple states of the page data are stored in the metadata of the local memory buffer pool and the metadata of the shared memory buffer pool. The modified state indicates that the page data has been modified in the local memory buffer pool of a current computing node but has not been synchronized back to the shared memory buffer pool. The exclusive state indicates that the page data is exclusively occupied by the current computing node, and the same page data in the local memory buffer pools of other computing nodes is in an invalid state. The shared state indicates that the page data is shared by multiple computing nodes and is in a valid state. The invalidated state indicates a state in which the page data is expired and cannot be used. The write lock adding state is similar to the exclusive state, and indicates that the page data is exclusively occupied by the current computing node, the current computing node performs a modification operation on the page data, and the same page data in local memory buffer pools of other computing nodes is in the invalid state. The read lock adding state indicates that the current computing node perform the read operation on the page data, and other computing nodes are not allowed to perform the modification operation on the page data.

For example, during running of the upper-layer application, when the second page data needs to be loaded, the first computing unit in the second computing node queries the local memory buffer pool to determine whether there is readable second page data. In the absence of the readable second page data, a page read instruction is sent to the first processing module in the second computing node, to read the second page data from the shared memory buffer pool of the second memory node. Alternatively, during running of the upper-layer application, when the second page data needs to be rewritten, the first computing unit in the second computing node queries the local memory buffer pool to determine whether there is rewritable second page data. In the presence of the rewritable second page data, the second page data in the local memory buffer pool is directly rewritten. In the absence of rewritable second page data, a page read instruction is sent to the first processing module in the second computing node, to read the second page data from the shared memory buffer pool of the second memory node, so as to perform a rewrite operation on the second page data read from the shared memory buffer pool.

In some embodiments, a case in which there are no readable second page data and no rewritable second page data in the local memory buffer pool is exemplarily described, but is not limited to the following listed cases. For example, the local memory buffer pool does not contain the readable second page data in any one of the following cases. The local memory buffer pool does not contain the second page data. The local memory buffer pool contains the second page data to which a write lock is added by another computing node in the local memory buffer pool. The local memory buffer pool contains the second page data marked as being in an invalidated state in the local memory buffer pool. Correspondingly, the local memory buffer pool does not contain the rewritable second page data in any one of the following cases. The local memory buffer pool does not contain the second page data. The local memory buffer pool contains the second page data to which a write lock is not added by the second computing node in the local memory buffer pool. To be specific, in this example, to maintain data consistency, when the write lock is added by the second computing node, the second page data in the local memory buffer pool can be rewritten (or modified) by the first computing unit in the second computing node.

For example, in the foregoing process, in response to the first computing unit in the second computing node being required to rewrite a second page, and the second page data being not contained in the local memory buffer pool, the first computing unit determines, according to a parameter of a current rewrite operation, whether the second page data involved in the current rewrite operation is existing page data. In response to the second page data being the existing page data, a page read instruction is sent to the first processing module in the second computing node, to read the second page data from the shared memory buffer pool of the second memory node. In response to the second page data that needs to be rewritten by the first computing unit in the second computing node being not the existing page data, to be specific, the first computing unit in the second computing node needs to add new page data to the second page data in the local memory buffer pool, the second page data is directly written to the local memory buffer pool. In some embodiments, the first computing unit in the second computing node further determines an inclusion relationship between the shared memory buffer pool in the second memory node and the local memory buffer pool, and sends a memory allocation request to the first processing module in the second computing node in response to the inclusion relationship between the shared memory buffer pool in the second memory node and the local memory buffer pool being an entire inclusion relationship, so that the first processing module sends the memory allocation request to the second processing module in the second memory node by using the first network interface card module of the second computing node, and the second processing module in the second memory node requests the second computing unit in the second memory node to allocate a memory space for the new second page data from the shared memory buffer pool, to cache second page data that is synchronized subsequently. In response to the inclusion relationship between the shared memory buffer pool in the second memory node and the local memory buffer pool being a partial inclusion relationship, the second computing unit in the second memory node allocates a memory space to the second page data in real time when receiving the second page data synchronized from the second computing node. The entire inclusion relationship means that page data in a local memory buffer pool of each computing node is stored in a shared memory buffer pool of at least one memory node. The partial inclusion relationship means that not all page data in a local memory buffer pool of each computing node is stored in the shared memory buffer pool. The inclusion relationship between the shared memory buffer pool and the local memory buffer pool may be pre-configured or determined.

For case 3 of adding the read lock to the page data, the first processing module in the second computing node and the second processing module in the second memory node cooperate to add the read lock to the second page data to be read in the shared memory buffer pool.

For example, to improve lock adding performance of adding the read lock to the page data, the first processing module in the second computing node is configured to: send a request for adding the read lock to the second processing module in the second memory node before receiving the second page data, so that the second processing module in the second memory node adds the read lock to the second page data.

For example, the second processing module in the second memory node is configured to: receive, before reading the second page data from the shared memory buffer pool, the request for adding the read lock sent by the first network interface card module in the second computing node by using the second network interface card module in the second memory node, to add the read lock to the second page data.

For example, an operation of the process of adding the read lock to the second page data by the second processing module in the second memory node includes the following steps. The second processing module in the second memory node, using metadata of the shared memory buffer pool, determines whether the write lock is added to the second page data by another computing node. The second processing module directly adds, in response to the write lock being not added to the second page data by the other computing node, the read lock to the second page data, and records related information about addition of the read lock to the second page data into the metadata of the shared memory buffer pool. The related information about addition of the read lock includes information such as the computing node that adds the read lock to the second page data and a time point at which the read lock is added. When the write lock is added to the second page data by another computing node, the second processing module in the second memory node initiates, by using the second network interface card module, an unlocking request to the computing node that adds the write lock to the second page data. The computing node adding the write lock to the second page data receives the unlocking request by using the first network interface card module of the computing node, and the first processing module of the computing node determines whether the second page data may be unlocked. In response to determining that the second page data is unlocked, the first network interface card module sends the unlocking confirmation information to the second network interface card module of the second memory node. After receiving the unlocking confirmation information provided by the second network interface card module, the second processing module of the second memory node unlocks the second page data. To be specific, the write lock is deleted from the second page data, and the metadata of the shared memory buffer pool is synchronously updated. Then, the read lock is added to the second page data again, and the related information about addition of the read lock to the second page data is recorded in the metadata of the shared memory buffer pool.

For example, for cases 4 and 5 of adding the write lock to and invalidating page data, to ensure data consistency, before the first computing unit in the third computing node rewrites the third page data in the local memory buffer pool, the first processing module in the third computing node and the second processing module in the third memory node cooperates to complete operations of adding the write lock to and invalidating the third page data in the shared memory buffer pool. The adding the write lock to the third page data is a process of adding the write lock to the third page data, and the invalidating the third page data is a process of notifying another computing node, other than the third computing node, using the third page data to perform invalidation processing on the third page data in the local memory buffer pool, to wait for latest third page data.

For example, to improve performance of adding the write lock to and invalidating page data, the first processing module in the third computing node is configured to: send, through the first network interface card module in the third computing node, a request for adding the write lock to and invalidating the third page data to the second processing module in the third memory node, so that the second processing module in the third memory node adds the write lock to the third page data in the shared memory buffer pool and notifies other computing nodes including the third page data in the local memory buffer pool to perform invalidation processing on the third page data.

For example, the second processing module in the third memory node is configured to: receive, through the second network interface card module in the third memory node, a request, sent by the first processing module in the third computing node, for adding the write lock to and invalidating the third page data to the shared memory buffer pool, add the write lock to the third page data, and notify other computing nodes including the third page data in the local memory buffer pool to perform invalidation processing on the third page data.

In some embodiments, the first processing module in the third computing node sends the request for adding the write lock to and invalidating. Correspondingly, the second processing module in the third memory node sequentially adds the write lock to the third page data and invalidate the third page data. Alternatively, in some embodiments, the first processing module in the third computing node first sends the request for adding the write lock to the second processing module in the third memory node, and the second processing module in the third memory node adds the write lock to the third page data and notifies the first processing module in the third computing node after the write lock is added. Then, the first processing module in the third computing node sends the invalidation request to the second processing module in the third memory node. The second processing module in the third memory node determines, through the metadata in the shared memory buffer pool, other computing nodes including the third page data in the local memory buffer pool, and sends an invalidation notification to the first processing modules of the other computing nodes, to notify the first processing modules of the other computing nodes to perform invalidation processing on the third page data in the local memory buffer pool. An operation of invalidating the third page data in the local memory buffer pool is specifically marking the third page data in the local memory buffer pool as being invalid. Certainly, other invalidation manners may alternatively be used. For example, deleting the third page data.

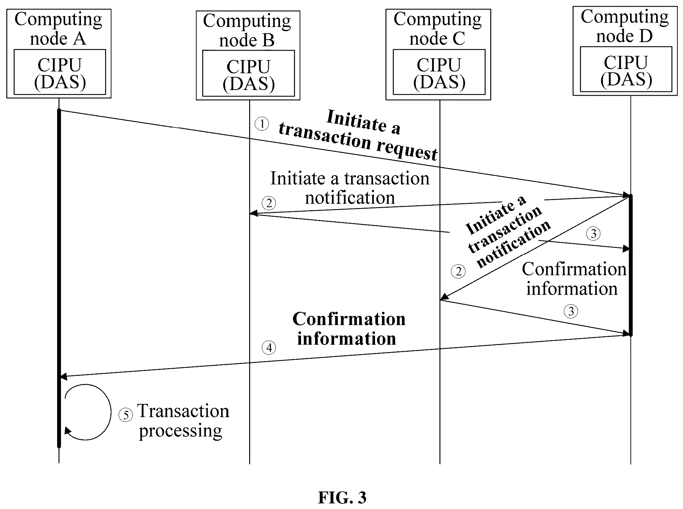

As shown in FIG. 3, a data consistency maintenance process involving multiple computing nodes is described as an example in which a CPU and a CIPU are integrated in a computing node and a memory node. The CIPU is shown in FIG. 3, and the CPU is not shown. As shown in FIG. 3, a DSA module is integrated into the CIPU for the computing node and the memory node, and a local buffer pool management module or a remote buffer pool management module runs on the DSA module. Certainly, the CIPU is further integrated with a network interface card module (for example, an NIC), and the network interface card module has a receive (Rx) interface and a transmit (Tx) interface, which are not shown in the figure. The DSA module provides a programmable capability. By means of the programmable capability, the DSA module is more flexible in functional implementation. Relatively, a first computing unit (for example, a CPU) belongs to a computing (CPU) domain. The CIPU belongs to a network domain, and may access a local memory buffer pool in the computing (CPU) domain through a cache consistency channel. In this way, when the NIC receives page data transmitted via a network, the page data may not be reported to the CPU through an input/output (IO) channel between the NIC and the CPU, but is directly processed by the local buffer pool management module running on the DSA module. Similarly, the page data to be sent after being processed by the DSA module may alternatively be directly sent through the NIC, and does not need to be uploaded to the CPU through a channel of the CPU for processing. The Cache consistency channel provides a more efficient channel for the DSA module to access the local memory buffer pool than the IO channel, especially for a data structure that requires indirect address access and discrete address access, such as a hash table and a linked list. Because both the DSA and the NIC are located on the CIPU and are closely coupled, the DSA may change a behavior of the NIC in real time by adjusting control information of the NIC.

In some embodiments, an entire consistency maintenance operation is completed by the CIPU and does not need to be reported to the CPU across the IO channel, and an IO channel delay is omitted in an entire consistency maintenance process. For example, when the computing node confirms a transaction, and the computing node finds that the page data related to the transaction is not unique to the computing node, state synchronization needs to be performed on other computing nodes. As shown in ① of FIG. 3, a local buffer pool manager of a computing node A needs to send a transaction request to a remote buffer pool manager of a remote memory node D. The transaction request includes metadata of page data related to the transaction. As shown in ② of FIG. 3, the remote buffer pool manager of the remote memory node sends a transaction notification to the computing node B and the computing node C related to the transaction. After receiving the transaction notification, the computing node B and the computing node C need to update a state of the related page data. As shown in ③ of FIG. 3, the computing node B and the computing node C send the confirmation information to the remote buffer pool manager of the remote memory node D. As shown in ④ of in FIG. 3, after receiving the confirmation information of the computing node B and the computing node C, the remote buffer pool manager of the remote memory node D sends the confirmation information to the local buffer pool manager on the computing node A that originally sends the request. As shown in ⑤ of FIG. 3, after receiving the confirmation information, the local buffer pool manager of the computing node A that sends the request performs a transaction confirmation operation.

The data consistency maintenance transaction related to the multiple computing nodes may be but is not limited to: a transaction of invalidating page data. In an example in which page data is invalidated, a transaction process shown in FIG. 3 is specifically as follows. A CIPU of the computing node A sends an invalidation request to the memory node D for page data to be invalidated. The memory node D is a memory node that stores the page data to be invalidated in a shared memory buffer pool. The computing node A determines the memory node D where the page data to be invalidated is located according to metadata and other related information of a local memory buffer pool, for example, a maintained correspondence between the computing node and each memory node and page data stored in the shared memory buffer pool of each memory node. After receiving the invalidation request, a CIPU of the memory node D determines, according to metadata and other related information of the shared memory buffer pool, other computing nodes, namely the computing node B and the computing node C, having the page data to be invalidated in the local memory buffer pool. Then, invalidation notifications are respectively sent to the computing node B and the computing node C, and the invalidation confirmation information is sent to the computing node A after invalidation confirmation information returned by the computing node B and the computing node C is received. After receiving the invalidation confirmation information sent by the memory node D, the computing node A notifies a CPU of the computing node A to perform a rewrite operation on the page data, to complete the transaction invalidation process.

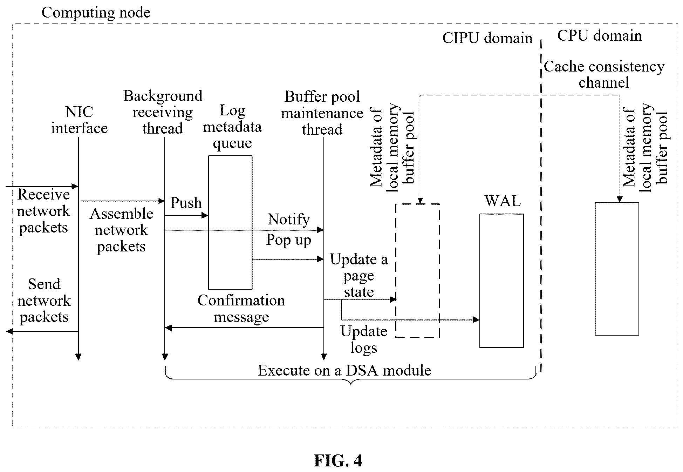

It is described herein that an internal processing logic of a first processing unit (for example, a CIPU) in a computing node and an internal processing logic of a second processing unit (for example, a CIPU) in a memory node after receiving a request or page data is not limited in some embodiments of the present disclosure. Any data processing manner in which data does not need to be reported to a CPU across an IO channel is applicable to some embodiments of the present disclosure. The following exemplarily describes, as shown in FIG. 4, an internal processing process in which the first processing unit in the computing node or the second processing unit (for example, the CIPU) in the memory node receives page data.

In some implementations, FIG. 4 shows a processing procedure after a computing node receives a page state update request. First, a network packet is received through an NIC interface. Metadata involved in page state update is divided into at least one network packet for transmission. A quantity of network packets into which page metadata is divided is related to a receiving capability of the NIC and a size of the page metadata. It is described herein that when the computing node receives the page data, the page data is divided into multiple network packets for transmission. In some embodiments of the present disclosure, a DAS module has a programmable capability, can support page data of various sizes, and may flexibly adapt to an upper-layer application. As shown in FIG. 4, an example in which the page metadata is divided into the multiple network packets is taken as an example. Therefore, on the DAS module, after the network packets are assembled by a background receiving thread, to obtain entire page metadata, the page metadata is pushed and written to a log metadata queue first, and a buffer pool maintenance thread is notified. The buffer pool maintenance thread reads the page metadata from a log metadata queue in a first-in-first-out manner, directly updates metadata of a local memory buffer pool of a CPU domain through a cache consistency channel, and meanwhile updates WAL data. After page state update is completed, the buffer pool maintenance thread returns a confirmation message to the background receiving thread. It should be noted that when confirmation information needs to be returned to an opposite end, a network packet including the confirmation information may be sent to the outside through the NIC interface. The foregoing series of operations are all performed on the DAS module and do not need to be reported to the CPU through the IO channel. To be specific, most operations are completed in a CIPU domain. The updated metadata of the local memory buffer pool is instantly visible to the CPU domain. In addition, because the DSA module and the NIC interface are closely coupled to the CIPU, the network packet is no longer reported to the CPU through the IO channel for processing, thereby eliminating transmission and copying delays of the IO channel.

In some embodiments, there is at least one upper-layer application in each computing node, and each upper-layer application corresponds to one local memory buffer pool. In some embodiments, an operation of issuing a data consistency maintenance task to the first processing unit means that page data to be written to the local memory buffer pool corresponding to each upper-layer application or other data (for example, a notification message) to be provided to each upper-layer application is received through a first network interface card module in the first processing unit. Based on this, to improve timeliness and efficiency of receiving data by the first network interface card module, the first processing module in the computing node may poll a receiving queue of the first network interface card module. In the presence of data to be processed in the receiving queue, the data to be processed is read from the receiving queue, an upper-layer application to which the data to be processed belongs is determined, and the data to be processed is written to a local memory buffer pool or metadata of the local memory buffer pool corresponding to the upper-layer application to which the data to be processed belongs, so that the first computing unit processes the data to be processed, and the data to be processed includes the page data or the notification message.

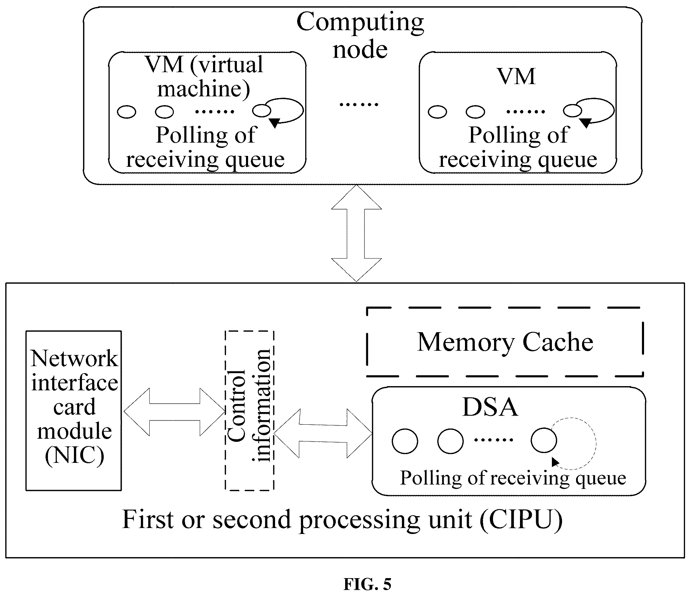

As shown in FIG. 5, it is assumed that multiple instances of a virtual machine (VM) are deployed on a computing node. In a conventional mode, each virtual machine maintains a receiving queue of the virtual machine and receives/transmits a network interface card message by using a pooling mode. The pooling mode refers to receiving/transmitting the network interface card message in a polling manner, to avoid a response delay caused in an interrupt manner, so as to improve the receiving/transmitting performance of the network interface card. For a latency-sensitive application, a pooling operation needs to be completed through an independent CPU core, which causes a waste of CPU resources. In some embodiments of the present disclosure, after a related buffer pool consistency maintenance logic is issued to a first processing unit or a second processing unit (for example, a CIPU), according to network communication bandwidth, a pooling task of each VM instance is also issued, and may be performed by a CPU core specified by the first processing unit or the second processing unit (for example, a DSA module in the CIPU). In this case, as long as the CPU core required for executing the pooling task in the DSA satisfies a bandwidth requirement, multiple CPU cores are no longer required, so that an energy efficiency ratio of the pooling task can be further improved, and CPU resources can be saved.

In an actual application, when a local memory buffer pool of a computing node has a relatively large amount of dirty page data, the dirty page data in the local memory buffer pool to be written back to a shared memory buffer pool of a remote memory node in time. In this case, a dirty page refresh speed seriously affects system performance. The case of writing back the dirty page data to the shared memory buffer pool is a specific application scenario of writing the page data to the shared memory buffer pool. To be specific, the first page data in the foregoing may be dirty page data to be written back.

Based on the foregoing, in response to the first page data being the dirty page data to be written back, a first processing module in a first computer node writes the first page data to a local doublewrite buffer, and sends, through a first network interface card module in the first computer node, the first page data in the local doublewrite buffer to a second processing module on a first memory node, so that the second processing module on the first memory node writes the first page data to a doublewrite buffer on the first memory node and points, to the doublewrite buffer of the first memory node, an address pointer pointing to the first page data in a shared memory buffer pool of the first memory node. Correspondingly, the second processing module in the first memory node is further configured to: write the first page data to the local doublewrite buffer in response to receiving the first page data, and point, to the local doublewrite buffer, an address pointer pointing to the first page data in the shared memory buffer pool, to read latest first page data from the local doublewrite buffer. By exchanging address pointers, one write operation can be reduced, facilitating improving write-back efficiency of the dirty page data.

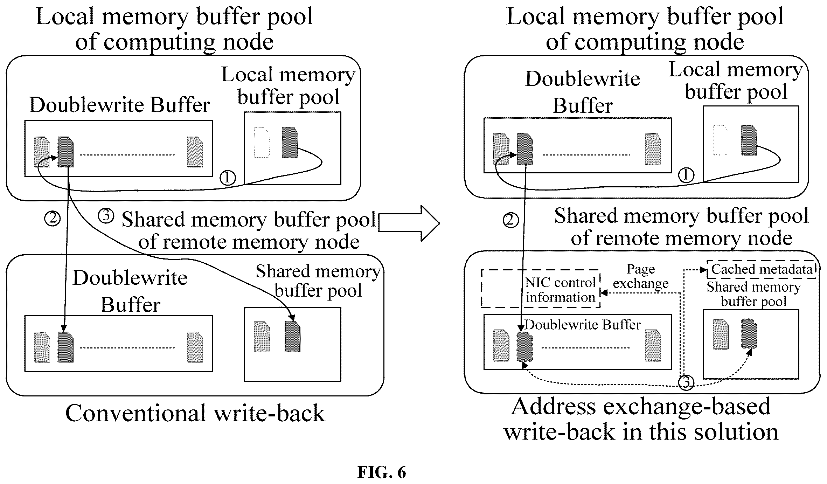

The left side of FIG. 6 shows a conventional write-back process. In the conventional write-back process, to ensure atomicity of page data, a double write mechanism needs to be used. To be specific, referring to step ①, dirty page data in a local memory buffer pool of a computing node is written to a local Doublewrite Buffer. Subsequently, referring to step ②, the dirty page data in the local Doublewrite Buffer of the computing node is written to a Doublewrite Buffer on a remote memory node. Then, referring to step ③, the dirty page data in the local Doublewrite Buffer of the computing node is written to a shared memory buffer pool on the remote memory node. In this way, for one write-back of the dirty page data, two write operations need to be performed on the remote memory node, namely steps ② and ③, thereby greatly increasing a delay.

By analogy, in some embodiments, after a processing unit (for example, a CIPU) is added to a computing node and a memory node, the problem of a conventional Double write mechanism can be efficiently eliminated. The right side of FIG. 6 shows an improved write-back process in some embodiments. Referring to step ①, dirty page data on a local memory buffer pool of a computing node is written to a local Doublewrite Buffer. Subsequently, referring to step ②, the dirty page data in the local Doublewrite Buffer of the computing node is written to a Doublewrite Buffer on a remote memory node. Next, referring to step ③, address information pointing to the dirty page data is modified in metadata of a shared memory buffer pool and control information of a network interface card module (for example, an NIC), and address information drr1 pointing to old page data is modified into address information drr2 of the dirty page data received in the local Doublewrite Buffer in the metadata of the shared memory buffer pool, so as to replace the old page data stored in the shared memory buffer pool with the written-back dirty page data. Meanwhile, the address information drr1 of the old page data stored in the shared memory buffer pool is carried in the control information of the network interface card module (for example, the NIC). The address information drr2 of the written-back dirty page data in the local Doublewrite Buffer is modified into the address information drr1 of the old page data previously stored in the shared memory buffer pool, so that the two operations have atomicity. In this way, when the dirty page is written back next time and the computing node writes back to the same location drr2 in the Doublewrite Buffer of the remote memory node, the address information drr1 in the shared memory buffer pool after modification and mapping is actually written. In addition, when the computing node reads the same location drr1 in the shared memory buffer pool of the remote memory node, the location drr2 in the Doublewrite Buffer of the remote memory node after modification and mapping is actually read, to ensure reading of latest page data. Because a second processing module (for example, a DSA) and a second network interface card module (for example, an NIC) on a second processing unit of the memory node are closely coupled, locally, highly efficient address modification and mapping may be used to replace one additional network data transmission, thereby facilitating improving the write-back efficiency.

In addition to the foregoing disaggregated storage and compute system, some embodiments of the present disclosure further provide a memory buffer pool maintenance method implemented based on the disaggregated storage and compute system. Some embodiments of the present disclosure further provide a memory buffer pool maintenance method. The memory buffer pool maintenance method is applied to a computing node. The computing node includes a first computing unit and a first processing unit. The first processing unit is interconnected with the first computing unit and is network-connected with a second processing unit in at least one memory node. The memory buffer pool maintenance method includes the following steps. Cooperation between the first processing unit and the second processing unit in at least one memory node is performed. Page data and/or a page state between a local memory buffer pool provided by the first computing unit for an upper-layer application and a shared memory buffer pool provided by at least one memory node for the upper-layer application are synchronized, thereby implementing data consistency. The local memory buffer pool is directly accessed by the first processing unit.

In some implementations, an operation of synchronizing page data and/or a page state between a local memory buffer pool provided by the first computing unit to an upper-layer application and a shared memory buffer pool provided by at least one memory node to the upper-layer application includes the following steps. First page data is read from the local memory buffer pool, and the first page data is sent to a second processing unit in a first memory node, so that the second processing unit in the first memory node writes the first page data to a shared memory buffer pool in the first memory node; and/or, second page data sent by a second processing unit in a second memory node, is received and written to the local memory buffer pool, where the second processing unit in the second memory node reads the second page data from a shared memory buffer pool of the second memory node and sends the second page data to the first processing unit; and/or, a request for adding a read lock is sent to the second processing unit in the second memory node before receiving the second page data, so that the second processing unit in the second memory node adds the read lock to the second page data; and/or, before the first computing unit rewrites third page data in the local memory buffer pool, a request for adding the write lock to and invalidating the third page data is sent to a second processing unit in a third memory node, so that the second processing unit in the third memory node adds the write lock to the third page data in the shared memory buffer pool and notifies other computing nodes including the third page data in the local memory buffer pool to perform invalidation processing on the third page data.

In some embodiments, the method further includes the following steps. The page read request is sent to the second processing unit in the second memory node in response to the page read instruction sent by the first computing unit, so that the second processing unit in the second memory node reads the second page data from the shared memory buffer pool of the second memory node and returns the second page data.

In some implementations, an operation of reading first page data from the local memory buffer pool includes the following steps. The first page data is read from the local memory buffer pool in response to a dirty page write-back instruction sent by the first computing unit, and the dirty page write-back instruction is sent by the first computing unit when determining, according to a page replacement mechanism, that there exists first page data to be retired and being in a modified state. Or, it is determined, according to the page replacement mechanism, that there exists first page data to be retired and being in a modified state in the local memory buffer pool, and the first page data is read from the local memory buffer pool.

In some embodiments, an operation of sending the first page data to the second processing unit in the first memory node includes the following steps. The first page data is written to a local doublewrite buffer, and the first page data in the local doublewrite buffer is sent to the second processing unit on the first memory node, so that the second processing unit writes the first page data to the doublewrite buffer on the first memory node, and points, to the doublewrite buffer of the first memory node, an address pointer pointing to the first page data in the shared memory buffer pool of the first memory node.

In some implementations, there is at least one upper-layer application, and one upper-layer application corresponds to one local memory buffer pool. The method further includes the following steps. A receiving queue of a first network interface card module in the first processing unit is polled. In the presence of data to be processed in the receiving queue, the data to be processed is read from the receiving queue. An upper-layer application to which the data to be processed belongs is determined. The data to be processed is written to a local memory buffer pool corresponding to the upper-layer application to which the data to be processed belongs, so that the first computing unit processes the data to be processed, where the data to be processed includes page data or a notification message.

Some embodiments of the present disclosure further provide a flowchart of a memory buffer pool maintenance method, which is applied to a memory node. The memory node includes a second computing unit and a second processing unit. The second processing unit is interconnected with the second computing unit and is network-connected with a first processing unit in at least one computing node. The method includes the following steps. Cooperation between the second processing unit and the first processing unit in at least one computing node is performed. Page data and/or a page state between a shared memory buffer pool provided by the memory node for an upper-layer application and a local memory buffer pool provided by at least one computing node for the upper-layer application are synchronized, thereby implementing data consistency. The shared memory buffer pool is directly accessed by the second processing unit.

In some implementations, an operation of synchronizing the page data and/or the page state between the shared memory buffer pool provided by the memory node for the upper-layer application and the local memory buffer pool provided by the at least one computing node for the upper-layer application includes the following steps. First page data sent by a first processing unit in a first computing node is received, and the first page data is written to the shared memory buffer pool. And/or, second page data is read from the shared memory buffer pool, and the second page data is sent to a first processing unit in a second computing node, so that the first processing unit in the second computing node writes the second page data to a local memory buffer pool of the second computing node. And/or, before reading the second page data, a request for adding a read lock sent by the first processing unit in the second computing node is received, and a read lock is added to the second page data. And/or, a request, sent by a first processing unit in a third computing node, for adding a write lock and invalidating third page data to the shared memory buffer pool is received, the write lock is added to the third page data, and other computing nodes including the third page data in the local memory buffer pool are notified to perform invalidation processing on the third page data.

In some embodiments, the method further includes the following steps. A page reading request sent by the first processing unit in the second computing node is received. Whether there is readable second page data in the shared memory buffer pool is queried according to the page reading request. When there is no readable second page data, other computing nodes that have the readable second page data are controlled to write back the second page data to the shared memory buffer pool.

In some embodiments, the method further includes the following steps. It is determined whether the write lock is added to the second page data. When the write lock is added, an unlock request is sent to a computing node that adds the write lock to the second page data. After the computing node that adds the write lock to the second page data returns unlock confirmation information, the write lock of the second page data is deleted, and the read lock is added to the second page data.

In some embodiments, the method further includes the following step. The first page data is written to a local doublewrite buffer in response to performing write-back of the first page data. An address pointer pointing to the first page data in the shared memory buffer pool is pointed to the local doublewrite buffer, to read the written-back first page data from the local doublewrite buffer.

For better understanding, the following describes a signaling interaction process between a computing node and a memory node.

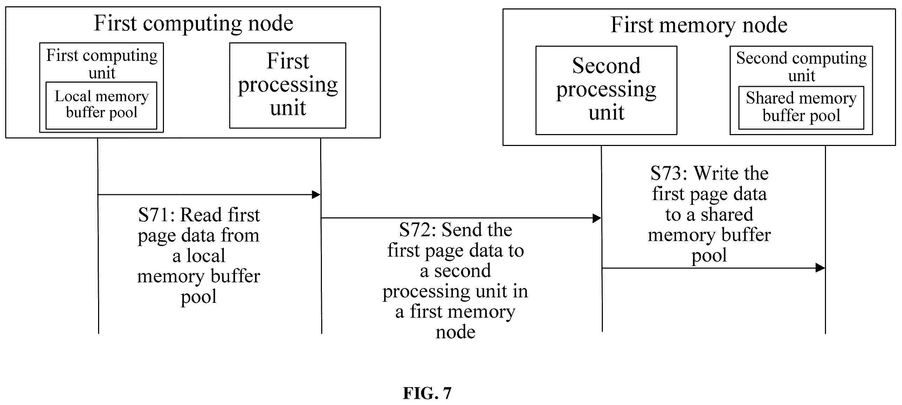

FIG. 7 is an exemplary signaling interaction diagram of a memory buffer pool maintenance method according to some embodiments of the present disclosure. As shown in FIG. 7, the method includes steps S71 to S73.

In step S71, a first processing unit in a first computing node reads first page data from a local memory buffer pool.

The local memory buffer pool is located in a first computing unit of the first computing node.

In step S72, the first processing unit in the first computing node sends the first page data to a second processing unit in a first memory node.

In step S73, the second processing unit in the first memory node writes the first page data to a shared memory buffer pool.

The shared memory buffer pool is located in a second computing unit in the first memory node.

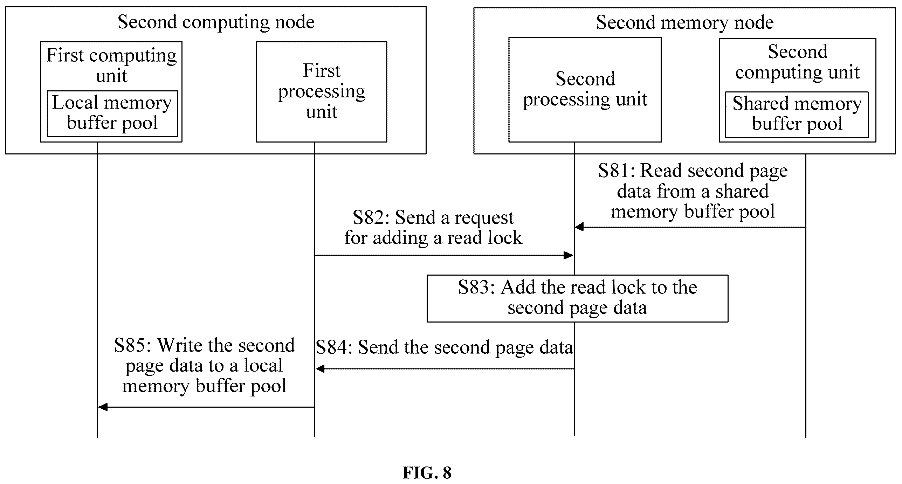

FIG. 8 is an exemplary signaling interaction diagram of another memory buffer pool maintenance method according to the present disclosure. As shown in FIG. 8, the method includes steps S81 to S85.

In step S81, a second processing unit in a second memory node reads second page data from a shared memory buffer pool.

In step S82, a second computing node sends a request for adding a read lock to the second processing unit in the second memory node.

In step S83, the second processing unit in the second memory node adds the read lock to the second page data.

In step S84, the second processing unit in the second memory node sends the second page data to a first processing unit in the second computing node.

In step S85, the first processing unit in the second computing node writes the second page data to a local memory buffer pool.

The local memory buffer pool is located in a first computing unit of the second computing node.

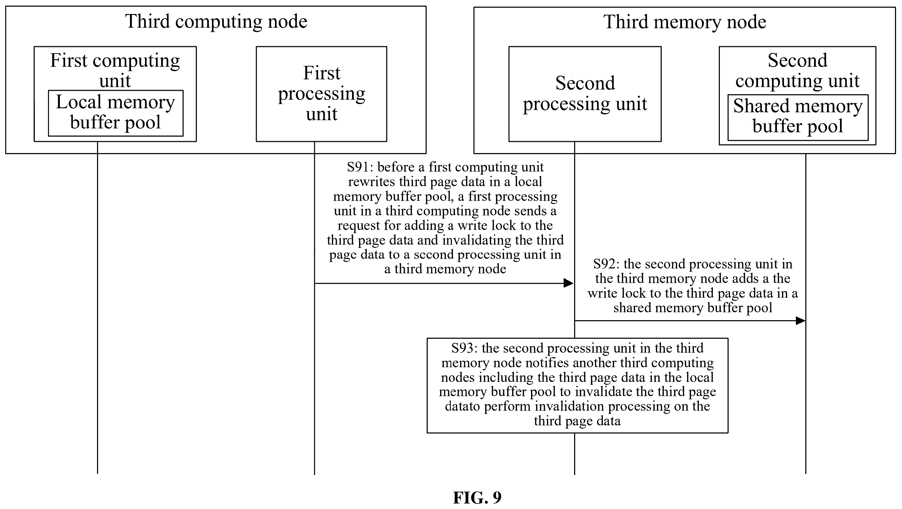

FIG. 9 is an exemplary signaling interaction diagram of another memory buffer pool maintenance method according to the present disclosure. As shown in FIG. 9, the method includes steps S91 to S93.

In step S91, before a first computing unit rewrites third page data in a local memory buffer pool, a first processing unit in a third computing node sends a request for adding a write lock to the third page data and invalidating the third page data to a second processing unit in a third memory node.

In step S92, the second processing unit in the third memory node adds the write lock to the third page data in a shared memory buffer pool.

In step S93, the second processing unit in the third memory node notifies other third computing nodes including the third page data in the local memory buffer pool to perform invalidation processing on the third page data.

Detailed implementations and beneficial effects of the steps in the methods of the foregoing embodiments are described in detail in the foregoing embodiments. Details are not described herein again.

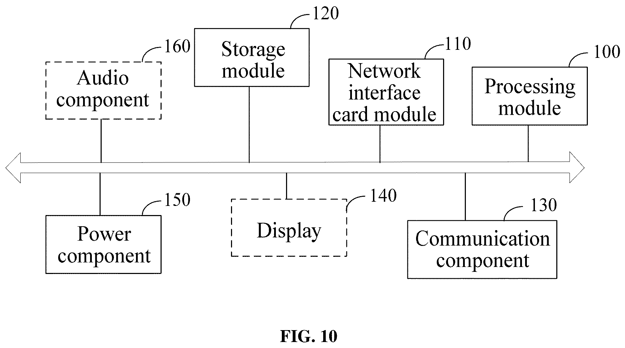

FIG. 10 is a structural schematic diagram of a processing unit according to some embodiments of the present disclosure. The processing unit may be implemented as the first processing unit in the computing node in the foregoing embodiments, or may be implemented as the second processing unit in the memory node in the foregoing embodiments. As shown in FIG. 10, the processing unit includes: a processing module 100, a network interface card module 110, and a storage module 120. The storage module 120 is configured to store a computer program, and may be configured to store various other data to support operations on the processing unit. Examples of the data include an instruction, a message, a picture, a video, and the like for any application or method operated on the processing unit.

The processing module 100 may be implemented by any type of transitory or non-transitory storage device or a combination thereof, such as a static random-access memory (SRAM), an electrically erasable programmable read only memory (EEPROM), an erasable programmable read only memory (EPROM), a programmable read-only memory (PROM), a read-only memory (ROM), a magnetic memory, a flash memory, a magnetic disk, or an optical disc.

The processing module 100 is coupled with the storage module 120, and is configured to execute the computer program in the storage module 120, to perform the steps in the memory buffer pool maintenance methods that may be performed by the first processing unit or the second processing unit in the foregoing embodiments.

In some embodiments, as shown in FIG. 10, the processing unit further includes: a communication component 130, a display 140, a power component 150, and an audio component 160. Some components are schematically provided in FIG. 10, which does not mean that the processing unit includes the components shown in FIG. 10. In addition, the components in dashed boxes in FIG. 10 are optional components rather than required components, which may be determined according to a product form of the processing unit.

For a detailed implementation process of actions performed by the processing module, refer to related descriptions in the foregoing method embodiments or device embodiments. Details are not described herein again.

Correspondingly, some embodiments of the present disclosure further provides a computer-readable storage medium storing a computer program. The computer program, when executed, can implement the steps that may be performed by the first processing unit or the second processing unit in the foregoing method embodiments.

Correspondingly, some embodiments of the present disclosure further provide a computer program product, including a computer program/instruction. The computer program/instruction, when executed by a processor, causes the processor to implement the steps that may be performed by the first processing unit or the second processing unit in the foregoing method embodiments.

In the embodiments of the present disclosure, for a disaggregated storage and compute architecture, a processing unit interconnected with a computing unit is additionally provided in a computing node and a memory node. A consistency maintenance task of memory cache data is issued to the processing unit for execution instead of being completed on the computing unit. The processing unit has a capability to directly access a local memory buffer pool or a shared memory buffer pool, so that data transmission during the consistency maintenance of the memory cache data is mostly completed inside the processing unit, and data does not need to be uploaded to the computing unit, thereby eliminating delay in data transmission between the computing unit and a network interface card, and achieving an objective of reducing the delay in data transmission during the consistency maintenance of the cache data.

The communication component is configured to facilitate communication in a wired or wireless manner between a device in which the communication component is located and another device. The device in which the communication component is located may access a wireless network based on a communication standard, such as wireless fidelity (WiFi), a 2-generation (2G), 3-generation (3G), 4-generation (4G)/long term evolution (LTE), or 5-generation (5G) mobile communication network, or a combination thereof. In an exemplary embodiment, the communication component receives a broadcast signal or broadcast related information from an external broadcast management system via a broadcast channel. In an exemplary embodiment, the communication component further includes a near field communication (NFC) module, to facilitate short range communication. For example, the NFC module may be implemented based on a radio frequency identification (RFID) technology, an infrared data association (IrDA) technology, an ultra wide band (UWB) technology, a Bluetooth (BT) technology, and other technologies.

The display includes a screen. The screen may include a liquid crystal display (LCD) and a touch panel (TP). When the screen includes the touch panel, the screen may be implemented as a touchscreen, to receive an input signal from a user. The touch panel includes at least one touch sensor to sense a touch, a slide, and a gesture on the touch panel. The touch sensor may not only sense a boundary of a touch or slide operation, but also detect duration and pressure related to the touch or slide operation.

The power component supplies power to various components of a device in which the power component is located. The power component may include a power management system, at least one power supply, and other components associated with power generation, management, and distribution for the device in which the power component is located.

The audio component may be configured to output and/or input an audio signal. For example, the audio component includes a microphone (MIC). When a device in which the audio component is located is in an operation mode, such as a call mode, a recording mode, and a voice recognition mode, the microphone is configured to receive an external audio signal. The received audio signal may be further stored in a memory or sent via the communication component. In some embodiments, the audio component further includes a speaker for outputting an audio signal.

It will be appreciated by a person of ordinary skill in the art that the embodiments of the present disclosure may be provided as methods, systems, or computer program products. Accordingly, the present disclosure may take the form of an entirely hardware embodiment, an entirely software embodiment, or some embodiments combining software and hardware. Furthermore, the present disclosure may take the form of a computer program product implemented in at least one computer-readable storage medium (including, but not limited to, a disk memory, a CD-ROM, and an optical memory) containing computer-available program code therein.

The present disclosure is described with reference to flowcharts and/or block diagrams of methods, devices (systems), and computer program products according to the embodiments of the present disclosure. It should be understood that each flow and/or block in the flowcharts and/or block diagrams, as well as combinations of the flows and/or blocks in the flowcharts and/or block diagrams, may be implemented by computer program instructions. These computer program instructions may be provided to a processor of a general-purpose computer, a special-purpose computer, an embedded processor, or another programmable data processing device to produce a machine so that the instructions executed by the processor of the computer or another programmable data processing device produce an apparatus for implementing the functions specified in at least one flow in the flowcharts and/or at least one block in the block diagrams.

These computer program instructions may alternatively be stored in a computer-readable memory capable of directing the computer or another programmable data processing device to operate in a particular manner so that the instructions stored in the computer-readable memory produce an article of manufacture including an instruction apparatus for implementing the functions specified in at least one flow in the flowcharts and/or at least one block in the block diagrams.

These computer program instructions may further be loaded onto the computer or another programmable data processing device such that a series of operational steps are performed on the computer or another programmable device to produce a computer-implemented process. Therefore, the instructions executed on the computer or another programmable device provide steps for implementing the functions specified in at least one e flow in the flowcharts and/or at least one block in the block diagrams.

In a typical configuration, a computing device includes at least one central processing unit (CPU), an input/output interface, a network interface, and a memory.

The memory may include a transitory memory in a computer-readable medium, a random access memory (RAM), and/or a non-transitory memory, such as a read only memory (ROM) or a flash RAM. The memory is an example of the computer-readable medium.

The computer-readable medium includes a non-transitory medium and a transitory medium, a removable medium and a non-removable medium, which may implement storage of information by using any method or technology. The information may be a computer-readable instruction, a data structure, a program module, or other data. Examples of a computer storage medium include, but are not limited to, a phase change RAM (PRAM), a static random-access memory (SRAM), a dynamic random access memory (DRAM), another type of random access memory (RAM), a read only memory (ROM), an electrically-erasable programmable read-only memory (EEPROM), a flash memory or another memory technology, a compact disc read-only memory (CD-ROM), a digital versatile disc (DVD) or another optical storage, a magnetic cassette tape, magnetic disk storage or another magnetic storage device, or any other non-transmission medium, which may be configured to store information accessible by the computing device. As defined herein, the computer-readable medium does not include transitory media, such as modulated data signals and carrier waves.

It should be further noted that the terms "include", "comprise", or any other variation thereof are intended to contain non-exclusive inclusion, so that processes, methods, articles, or devices including a series of elements not only include those elements, but also include other elements which are not clearly listed, or further include inherent elements of the processes, methods, articles, or devices. Without more limitations, an element defined by a sentence "including a" does not exclude a case that there are still other same elements in the processes, methods, articles, or devices that include the element.

The foregoing descriptions are embodiments of the present disclosure and are not intended to limit the present disclosure. For a person of ordinary skill in the art, the present disclosure may have various changes and variations. Any modification, equivalent replacement, improvement, and the like made within the spirit and principle of the present disclosure should be included within the scope of the claims of the present disclosure.

## Claims

1. A computing node, comprising: a first computing unit and a first processing unit, the first computing unit being interconnected with the first processing unit, wherein
the first computing unit is configured to run an upper-layer application and provide a local memory buffer pool for caching page data to the upper-layer application, the local memory buffer pool being directly accessed by the first processing unit; and
the first processing unit is further network-connected with a second processing unit in at least one memory node, and is configured to perform data interaction with the second processing unit, to synchronize page data and/or a page state between the local memory buffer pool and a shared memory buffer pool provided by the at least one memory node for the upper-layer application.

2. The computing node according to claim 1, wherein the first processing unit comprises: a first processing module and a first network interface card module, the first processing module being interconnected with the first computing unit through an interconnection channel, the first network interface card module being network-connected with the second processing unit.

3. The computing node according to claim 2, wherein the first processing module is configured to:
read first page data from the local memory buffer pool, and send the first page data to a second processing unit in a first memory node via the first network interface card module, so that the second processing unit in the first memory node writes the first page data into the shared memory buffer pool in the first memory node;
and/or,
receive, via the first network interface card module, second page data sent by the second processing unit in a second memory node, and write the second page data into the local memory buffer pool, wherein the second page data is read, by the second processing unit in the second memory node, from the shared memory buffer pool of the second memory node and then sent to the first network interface card module;
and/or,
send a request for adding a read lock to the second processing unit in the second memory node before receiving the second page data, so that the second processing unit in the second memory node adds the read lock to the second page data;
and/or,
send, before the first computing unit rewrites third page data in the local memory buffer pool, a request for adding a write lock to and invalidating the third page data to the second processing unit in a third memory node via the first network interface card module, so that the second processing unit in the third memory node adds the write lock to the third page data in the shared memory buffer pool of the third memory node and notifies other computing nodes containing the third page data in local memory buffer pools of the other computing nodes to perform invalidation processing on the third page data.

4. A memory node, comprising: a second computing unit and a second processing unit, the second computing unit being interconnected with the second processing unit, wherein
the second computing unit is configured to provide a shared memory buffer pool for an upper-layer application running on at least one computing node, the shared memory buffer pool being directly accessed by the second processing unit; and
the second processing unit is further network-connected with a first processing unit in at least one computing node, and is configured to perform data interaction with the first processing unit, to synchronize page data and/or a page state between the shared memory buffer pool and a local memory buffer pool provided by the at least one computing node for the upper-layer application.

5. A memory buffer pool maintenance method, applied to a computing node, the computing node comprising a first computing unit and a first processing unit, the first processing unit being interconnected with the first computing unit and network-connected with a second processing unit in at least one memory node, the memory buffer pool maintenance method comprising:
performing, by the first processing unit, data interaction with the second processing unit in at least one memory node, to synchronize page data and/or a page state between a local memory buffer pool provided by the first computing unit for an upper-layer application and a shared memory buffer pool provided by at least one memory node for the upper-layer application;
wherein the local memory buffer pool is directly accessed by the first processing unit.

6. The memory buffer pool maintenance method according to claim 5, wherein performing, by the first processing unit, data interaction with the second processing unit in the at least one memory node, to synchronize page data and/or the page state between the local memory buffer pool provided by the first computing unit for the upper-layer application and the shared memory buffer pool provided by the at least one memory node for the upper-layer application comprises:
reading first page data from the local memory buffer pool, and sending the first page data to the second processing unit in a first memory node, so that the second processing unit in the first memory node writes the first page data into the shared memory buffer pool in the first memory node;
and/or,
receiving second page data sent by the second processing unit in a second memory node, and writing the second page data into the local memory buffer pool, wherein the second page data is read, by the second processing unit in the second memory node, from the shared memory buffer pool of the second memory node and then sent to the first processing unit;
and/or,
sending a request for adding a read lock to the second processing unit in the second memory node before receiving the second page data, so that the second processing unit in the second memory node adds the read lock to the second page data;
and/or,
sending, before the first computing unit rewrites third page data in the local memory buffer pool, a request for adding a write lock to and invalidating the third page data to the second processing unit in a third memory node, so that the second processing unit in the third memory node adds the write lock to the third page data in the shared memory buffer pool and notifies other computing nodes containing the third page data in local memory buffer pools of the other computing nodes to perform invalidation processing on the third page data.

7. The memory buffer pool maintenance method according to claim 6, wherein reading the first page data from the local memory buffer pool comprises:
reading the first page data from the local memory buffer pool in response to a dirty page write-back instruction sent by the first computing unit, the dirty page write-back instruction being sent by the first computing unit when determining, according to a page replacement mechanism, that there exists first page data to be retired and being in a modified state;
or,
in response to determining, according to the page replacement mechanism, that page data to be retired and being in the modified state in the local memory cache pool is the first page data, reading the first page data from the local memory buffer pool.

8. The memory buffer pool maintenance method according to claim 6, wherein sending the first page data to the second processing unit in the first memory node comprises:
writing the first page data into a local doublewrite buffer, and sending the first page data in the local doublewrite buffer to the second processing unit on the first memory node, so that the second processing unit writes the first page data to a doublewrite buffer on the first memory node, and updates an address pointer pointing to the first page data in the shared memory buffer pool of the first memory node to point to the doublewrite buffer.

9. The memory buffer pool maintenance method according to any one of claims 6 to 8, wherein the number of the upper-layer application is at least one, each upper-layer application corresponds to one local memory buffer pool; and the memory buffer pool maintenance method further comprises:
polling a receiving queue of the first network interface card module in the first processing unit; and reading, in response to data to be processed being in the receiving queue, the data to be processed from the receiving queue; and
determining an upper-layer application to which the data to be processed belongs, and writing the data to be processed into the local memory buffer pool corresponding to the upper-layer application to which the data to be processed belongs, so that the first computing unit processes the data to be processed, the data to be processed comprising page data or a notification message.

10. A memory buffer pool maintenance method, applied to a memory node, the memory node comprising a second computing unit and a second processing unit, the second processing unit being interconnected with the second computing unit and network-connected with a first processing unit in at least one computing node, the memory buffer pool maintenance method comprising:
performing, by the second processing unit, data interaction with the first processing unit in the at least one computing node, to synchronize page data and/or a page state between a shared memory buffer pool provided by the memory node for an upper-layer application and a local memory buffer pool provided by at least one computing node for the upper-layer application;
wherein the shared memory buffer pool is directly accessed by the second processing unit.

11. The memory buffer pool maintenance method according to claim 10, wherein performing, by the second processing unit, data interaction with the first processing unit in at least one computing node, to synchronize the page data and/or the page state between the shared memory buffer pool provided by the memory node for the upper-layer application and the local memory buffer pool provided by the at least one computing node for the upper-layer application comprises:
receiving first page data sent by the first processing unit in a first computing node, and writing the first page data into the shared memory buffer pool;
and/or,
reading second page data from the shared memory buffer pool, and sending the second page data to the first processing unit in a second computing node, so that the first processing unit in the second computing node writes the second page data into the local memory buffer pool of the second computing node;
and/or,
receiving, before reading the second page data, a request for adding a read lock sent by the first processing unit in the second computing node, and adding the read lock to the second page data;
and/or,
receiving a request, sent by the first processing unit in a third computing node, for adding a write lock to and invalidating the third page data in the shared memory buffer pool, adding the write lock to the third page data, and notifying other computing nodes containing the third page data in local memory buffer pools of the other computing nodes to perform invalidation processing on the third page data.

12. The memory buffer pool maintenance method according to claim 11, further comprising:
writing the first page data to a local doublewrite buffer in response to performing write-back of the first page data; and
updating an address pointer pointing to the first page data in the shared memory buffer pool to point to the local doublewrite buffer, so as to read the first page data from the local doublewrite buffer.

13. A disaggregated storage and compute system, comprising: multiple computing nodes as claimed in any one of claims 1 to 3, at least one memory node as claimed in claim 4, and at least one storage node;
wherein the at least one storage node is configured to persistently store page data in a shared memory buffer pool and/or a local memory buffer pool.

14. A processing unit, the processing unit comprising: a processing module, a network interface card module, and a storage module, the storage module storing a computer program, and the processing module executing the computer program stored in the storage module, to implement steps of the memory buffer pool maintenance methods as claimed in any one of claims 5 to 9 and claims 10 to 12.

15. A computer-readable storage medium storing a computer program, the computer program, when executed by a processor, causing the processor to implement steps of the memory buffer pool maintenance methods as claimed in any one of claims 5 to 9 and claims 10 to 12.
